Europäisches Patentamt

European Patent Office

Office européen des brevets

(19)

(11) Publication number: **0 188 270 B1**

# EUROPEAN PATENT SPECIFICATION

(12)

(45) Date of publication of patent specification: **17.06.92**    (51) Int. Cl.5: **C04B 35/80**, C04B 35/58

(21) Application number: **86100406.7**

(22) Date of filing: **14.01.86**

(54) Fibre-reinforced ceramic and process therefor.

(30) Priority: **17.01.85 US 692441**

(43) Date of publication of application:
**23.07.86 Bulletin 86/30**

(45) Publication of the grant of the patent:
**17.06.92 Bulletin 92/25**

(84) Designated Contracting States:
**DE FR GB**

(56) References cited:
**EP-A- 0 128 409**
**FR-A- 2 475 534**

**CHEMICAL ABSTRACTS, vol. 98, no. 16, April 18, 1983, page 293, no. 131079d, Columbus, Ohio, US; D.B. FISCHBACH et al.: "Exploratory research on silicon nitride composites" & REPORT 1982, DOE/ET/13389-T1**

**CERAMIC ENGINEERING AND SCIENCE PROCEEDINGS, vol. 6, no. 9/10, September/October 1985, pages 1206-1216, Columbus, Ohio, US; T.F. FOLTZ: "SiC fibers for advanced ceramic composites" & 86th ANNUAL MEETING OF THE AMERICAN CERAMIC SOCIETY, Pittsburg, PA, US, April 30 -**

**May 2, 1984**

**CHEMICAL ABSTRACTS, vol. 99, no. 18, October 1983, page 301, no. 144922u, Columbus, Ohio, US; & JP-A-58 91 073**

(73) Proprietor: **NORTON COMPANY
1 New Bond Street
Worcester Massachusetts 01606(US)**

(72) Inventor: **Rossetti, George A.
60 Commons Drive, Apt. 45
Shrewsbury Massachusetts(US)**
Inventor: **Hartline, Stephen D.
41 Hemlock Drive
Millbury Massachusetts(US)**

(74) Representative: **Zumstein, Fritz, Dr. et al
Zumstein & Klingseisen Patentanwälte
Bräuhausstrasse 4
W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to ceramic materials suitable for use under high-temperature conditions requiring resistance to mechanical and thermal shocks, such as are encountered in rocket nozzles, internal combustion engines, and other practically important devices. More particularly, this invention relates to composite ceramics comprising a matrix of silicon nitride and reinforcing inclusions of silicon carbide.

Because of its low coefficient of thermal expansion, silicon nitride has long been regarded as one of the most attractive ceramics for use in conditions requiring resistance to the shock of sudden changes in temperature. However, the resistance to mechanical shock at most temperatures and the creep strength at high temperatures of homogenous silicon nitride were found to be unsatisfactory.

One of the early attempts to improve the properties of silicon nitride by inclusion of other materials in it was disclosed by Parr et al. in US-A-3 222 438. This taught the inclusion of 5-10% of silicon carbide powder among silicon metal powder which was to be converted to a solid ceramic body by treatment with nitrogen gas at a sufficiently high temperature to promote the conversion of the silicon to its nitride. This process, termed reaction bonding, produced coherent silicon nitride ceramic bodies with creep resistance significantly improved over those made without the silicon carbide powder additions. The bodies to be fired were formed from powders by cold pressing in a die set, and the addition of cetyl alcohol as a binder and lubricant for the powder before pressing was recommended. The disclosure of this patent strongly recommended, and the claims all required, that the reaction bonding temperature exceed 1420°C, the melting point of silicon, during part of the bonding cycle. The modulus of rupture for the composite bodies formed was not given being described merely as comparing "favourably [SiC] with those already published by others".

The use of relatively short silicon carbide fibers for reinforcing ceramics was disclosed by Hough in US-A-3 462 340. Orientation of the fibers by mechanical or electrostatic forces was taught as an advantage in this patent, but no quantitative information about the mechanical properties of the resulting composites was given. Moreover, the matrix of the composites taught by this patent was limited to "pyrolitic" materials. The term "pyrolitic" was not particularly clearly defined in the patent specification, but it was apparently restricted to materials having all their chemical constituent elements derived from a gas phase in contact with the hot reinforcing filaments and a mold-like substrate which determined the inner shape of the body to be formed. No method was taught or suggested in the patent for obtaining silicon nitride as a "pyrolitic" product within this definition.

A use of very short fibers of silicon carbide to reinforce ceramic composites having a silicon nitride matrix was taught by Komeya et al. in US-A-3 833 389. According to the teachings of this patent, the matrix was formed by sintering silicon nitride powder rather than by nitriding silicon metal powder, and the maximum length of the silicon carbide fiber inclusions was 40 μm. A rare earth component was required in the matrix in addition to silicon nitride, and the highest modulus of rupture (denominated as "breaking strength") was 375 megapascals (hereinafter MPa).

An improvement in modulus of rupture for composites having a silicon nitride matrix formed by sintering was disclosed by Yajima et al. in US-A-4 158 687. Continuous silicon carbide fibers formed by a special process described in US-A-4 100 233 were used as the reinforcing material in this case, and "polycarbosilane" powder was added to the silicon nitride powder to improve the bonding between the matrix and the fibers. By these means a composite body containing unidirectionally oriented fibers with a modulus of rupture (denominated in this instance as "flexural strength") of 610 MPa was achieved.

Another type of composite with oriented continuous fiber silicon carbide reinforcement was taught by Brennan et al. in US-A-4 324 843. The matrix specified by Brennan was a crystalline ceramic prepared by heating a glassy, non-crystalline powder of the same chemical composition. This description of the matrix appears to exclude silicon nitride, which was not taught in the patent as a matrix material. In fact, the broadest claim of this patent required a matrix of metal aluminosilicates or mixtures thereof. Perhaps for this reason, the highest modulus of rupture noted in this patent was less than 100 MPa.

Still another microstructural variation for silicon nitride-silicon carbide composites was disclosed by Hatta et al. in US-A-4 335 217. According to this teaching, neither fibers nor powder of silicon carbide or silicon nitride is used as an initial constituent of the composite. Instead, a powdery polymer containing both silicon and carbon is mixed with silicon metal powder, pressed, and then heated in a nitrogen atmosphere. The polymer gradually decomposes under heat to yield silicon carbide, while the silicon powder reacts with nitrogen to yield silicon nitride. The composition of the final composite is described as "comprising crystals of beta-silicon carbide, alpha-silicon nitride, and beta-silicon nitride ... forming interwoven textures of beta-silicon carbide among said alpha-silicon nitride and beta-silicon nitride crystals without chemical bonding to provide micro gaps ... for absorption of thermal stresses." The highest reported modulus of rupture for these composites was 265 MPa.

In this Hatta patent there was also a casual reference to "Conventional SiC-$Si_3N_4$ composite systems ... fabricated by firing a mixture of silicon powder with ... SiC fibers in a nitrogen gas atmosphere at a temperature above 1220°C." No further details about how to make such allegedly conventional composites were given in the specification, however.

Brief reference might also be made to other background patents considered less relevant than the above to understanding the present invention. This would include US-A 3 853 567, 3 892 583, 4 097 294, 4 117 057, 4 127 411, 4 177 230, and 4 289 720, all of which describe composites made with organic silicon compounds not needed for practice of the instant invention; US-A-4 068 037, 4 315 968, and 4 340 636, all of which describe the manufacture of silicon carbide fibers of types which might be used in the instant invention but are not part of the subject of the instant invention; and US-A-3 305 372, which describes the manufacture of composites with silicon carbide reinforcement, but which, unlike the composites of the instant invention, are made by simultaneously nitriding and reducing powders of silicates containing no more than 30% silicon to form a matrix which contains some silicon nitride or oxynitride but often retains considerable amounts of oxygen.

Much of the non-patent literature in the field of silicon nitride-silicon carbide composites, which in general terms covers the same ground as the patents referenced above, was reviewed by Fischbach et al. in their final report to the Department of Energy under Grants ET-78-G-01-3320 and DE-FG-01-78-ET-13389. This report also disclosed some original work relevant to consideration here: The preparation of pliable tape-cast silicon-polymer binder "foils", including some in which the silicon-polymer blend was cast from organic solvent, and the use of these foils to bond uniaxially oriented silicon carbide fibers pressed between such foils; the pressed laminate of fibers and foils was later nitrided to produce a composite of silicon carbide fibers in a silicon nitride matrix. The maximum amount of fiber introduced into any of their composites by these investigators was 10%, and the maximum modulus of rupture of their best composite was 220 MPa. These investigators found that slip cast silicon powders on pre-oriented fiber arrays gave better composites than those made by bonding fiber arrays between foils as described above and that the types of fibers reported as very successfully used by Yajima in US-A-4 158 687 were not satisfactory for the bonding methods employed by Fischbach because of a tendency for the interior of these fibers to debond from the sheath layer of the fibers during nitridation.

One generalization which appears clearly from the background information recited above is that the properties of composites of silicon nitride and silicon carbide, like those of composites generally, are very sensitive to the details of microstructure of the composite. (A similar conclusion was stated in the Fischbach reference already cited.) Microstructural details in turn are sensitive to the chemical and physical characteristics of the starting materials and the processes used to convert the starting materials into a coherent composite body. Little predictability about the quality of composites from knowledge of the materials and processes used to make the composites is possible at the present stage of knowledge, except perhaps when exactly reproducing prior methods of manufacture.

Chemical Abstracts, volume 99, No. 18, October 1983, page 301, No. 144922n, Columbus Ohio, US, discloses high strength silicon nitride ceramics reinforced with 5-35% Silicon Carbide fibers.

Ullmanns Encyclopedia discloses the use of parallel orientation of fibers in composite materials.

We have discovered that silicon carbide fibers substantially longer than forty microns, specifically at least one millimeter in length, and having a carbon-rich or silicon-rich coating can be used more advantageously than short fibers to reinforce composites with a silicon nitride matrix formed by reaction bonding. Large diameter fibers, at least as large as 140 microns in diameter, can be used with results at least equal to those obtained with smaller diameter fibers. The composites have a modulus of rupture over 550 MPa, a Young's modulus at strains below 300 MPa of at least 375 GPa, and a non-catastrophic failure mode under mechanical stress, that is, said fibers collectively have sufficient tensile strength to bear a load on said composite at the point of matrix failure without fibre tensile failure.

The properties of the products are particularly good if substantial regions of the composite produced contain long fibers which are substantially straight and mutually parallel and the orientation of such fibers is transverse to the direction(s) of the greatest strain(s) exerted on the composite during its service life.

A convenient and preferred method for making composite bodies according to our invention involves the intermediate manufacture of a flexible tape comprising a layer of straight, continuous, closely packed, mutually parallel silicon carbide fibers embedded in a matrix of silicon powder and an organic binder. The tape is then cut into suitable shape(s) to accommodate the shape of the composite to be made, and the assembly of pieces of cut tape is compressed together to the final volume and shape desired for the composite. The final composite is then prepared by debinderizing the pressed assembly and subjecting it to an appropriate temperature below the melting point of silicon in an atmosphere of nitrogen gas, for a sufficient time to convert substantially all of the elemental silicon in the composite to silicon nitride.

With reference to the accompanying drawings, Figure 1 depicts the stress-strain diagrams for composites of conventional reaction bonded silicon nitride and for fiber reinforced composites according to this invention. Figure 2 shows the strain bearing capability of one of the composites of this invention. Figures 3 and 4 show the stress-strain diagrams for additional composites according to this invention.

The preferred type of silicon carbide fibers for making composites according to this invention is SCS grade from AVCO Specialty Materials, Lowell, Massachusetts, with a diameter of about 140 $\mu$m. Further details about these fibers are given in Example 1. It is believed that this type of fibers gives better results than others because of a temperature stable high strength and modulus relative to the matrix to be formed, relatively low reactivity of the outer surface of the fiber with the matrix, and the beneficial presence of a carbonaceous coating on the fibers.

In light of past experience with ceramic composites, it is surprising that fibers with such a large diameter as 140 $\mu$m do not appear to act as strength-limiting flaws in the composite structure, particularly when high volume loadings of such fibers are used. This is especially surprising in view of the substantial difference in thermal expansion coefficients between the fibers and the matrix. Also surprising is that thorough densification of the matrix is not always necessary to achieve desirable composite properties, although as with other composites, relatively high densification of the matrix is preferable.

The introduction of fibers into the shape of the eventual product to be made may be accomplished by means conventional in the art. Ideally, when the final product is expected to be subject to stresses in use primarily along a single direction, the fibers should be arranged as much as practicable transverse to that direction, so that the expected stress will have to bend the fibers in order to distort the body they are reinforcing. In many cases, however, it will be adequate to utilize the fiber in lengths of as little as one millimeter with relatively random orientation.

Many final product structures can be more effectively assembled from thin flat "tapes" containing oriented fibers. To make such tapes, a sufficient number of fibers to cover the width of the tape to be made are supported by any appropriate mechanical means in a monolayer with the fibers substantially straight and coparallel. This fiber array is arranged at the bottom of a vessel with walls, or otherwise made suitable for uniform coating with a slurry of silicon powder and a polymer binder in a suitable solvent.

The preferred silicon powder was a technical grade, nominally 99% pure, with a mean particle size of about 3 $\mu$m. (A suitable material was obtained from Eikem Metals Co., Marietta, Ohio.). Although many polymeric materials, natural or synthetic, such as polyvinyl acetate, vegetable gums, etc. could be used, the preferred polymeric binder was plasticized poly(vinylbutyral); specifically the product marketed as Butvar 891 by Monsanto Chemical Co., Springfield, Massachusetts was particularly preferred. About 33 parts by weight of silicon, 12 parts by weight of polymer (including plasticizer), and 55 parts by weight of suitable solvent such as alcohol are mixed together. The mixture is coated by any appropriate means, such as hand application, a curtain coater, etc. over the prepared array of silicon carbide fibers to a sufficient depth so as to cover the fibers after drying. The combination of fibers and slurry is dried at about 20°C for about 2 hours in the ambient atmosphere, resulting in a flexible coherent tape from which the solvent has been substantially expelled.

The tapes thus prepared may be laid up by conventional means to fit any desired final shape. To make samples of composites for testing, suitable lengths of the tape thus made were cut, stacked one atop another while preserving a common direction of orientation of the fibers within the cut lengths of tape, and mechanically pressed perpendicular to the planes of the tape segments in the stack, preferably under a pressure of at least 0.4 but not more than 0.7 Megapascals and at a temperature of about 20°C. In a typical example, compressed blocks fifty millimeters in both width and length and 6-8 mm in thickness were thus prepared.

The compressed blocks are then treated to remove the polymer binder constituent in the blocks. Preferably, this is accomplished by heating the blocks in an inert gas atmosphere at a rate of temperature increase of about 1250°C per hour to a final temperature of about 1250°C, holding at that temperature for about fifteen minutes, and cooling by natural convection at a rate estimated to be between 100 and 200°C per hour. During the heating process, the flow rate of inert gas should be maintained at a sufficient volume to sweep away any significant gaseous decomposition products formed. By this process the original content of polymer binder is almost totally removed from the blocks, but because of sintering of the silicon powder particles, the blocks remain coherent. This process is denoted as "debinderizing".

The debinderized blocks are converted to their final ceramic form by converting substantially all the silicon in the blocks to silicon nitride. This nitriding process is accomplished by heating the blocks in an atmosphere of nitrogen gas with chemical purity of at least 99.998%. Preferably, the nitriding is performed in a standard cold-wall vacuum furnace by a so-called rate limited cycle as described immediately below.

For rate limited nitriding, the debinderized composite samples are initially heated in the vacuum furnace in vacuo to a temperature of about 1100°C. Nitrogen gas is then admitted to the furnace chamber until the total furnace pressure is slightly less than one atmosphere. The temperature is then increased, initially at a rate of about 100°C per hour. As the temperature rises, nitriding proceeds at a faster rate and begins to cause the pressure in the furnace to fall as nitrogen is coverted to non-volatile silicon nitride. The pressure drop is monitored by a sensor and a solenoid valve controlled by the sensor allows additional nitrogen gas into the furnace only to the extent necessary to maintain the pressure between 0.3 and 0.7 atmospheres. When consumption of nitrogen is rapid, the temperature increase rate is greatly reduced, so that substantially complete reaction normally requires 30-48 hours, even though the final temperature is limited to a maximum of 1380°C, below the melting point of silicon.

After completion of the nitriding treatment, the ceramic blocks are cooled at a rate of not greater than 200°C per hour. The final result is a ceramic body resistant to thermal and mechanical shocks and suitable for long term service at temperatures up to about 1200°C. These composites contain 46-50 volume percent silicon carbide filaments and have an overall bulk density of 2.4-2.5 g/cm$^3$. The density of the silicon nitride matrix component is believed to be about 1.8-1.9 gm/cm$^3$.

The superiority of the ceramic composites made according to this invention over conventional prior art composites is indicated by the results of conventional laboratory testing in a four point or three point bend test geometry. (The four point test was performed with a 25 mm lower span and a 12 mm upper span; the three point test was performed with an 8:1 lower span to specimen depth ratio and a constant displacement rate of 8.5 x 10$^{-4}$ mm/sec.) The test specimens exhibited an elastic deformation range in bending up to as much as 700 MPa, with Young's moduli of 380-420 GPa through this range of strains. The average modulus of rupture of several specimens was 580 MPa, substantially above those of most prior reports. Finally, the mechanism of initial failure of elasticity in most specimens was non-catastrophic, as defined in more detail below in the description of Example 1. With most previous composites, the first reduction of load-bearing capacity under stress usually results in complete rupture, with obvious adverse consequences for the integrity of any structure composed of such materials.

The scope and variety of the invention can be further appreciated from the following examples.

Example 1

For this example, the silicon carbide fibers used were obtained from AVCO Specialty Materials, Lowell, Massachusetts. The fibers consist primarily of a layer about sixty microns thick of chemically vapor deposited silicon carbide on a filamentous carbon substrate fiber with diameter of about twenty microns. The outer surface layer of these fibers is reported by the supplier to be relatively rich in carbon compared with stoichiometric silicon carbide, but the bulk of these fibers exhibit thermal, chemical, and mechanical properties that more closely approximate those of bulk stoichiometric silicon carbide than do the fibers prepared from polyorganosilicon precursors.

Fibers were cut into 60 mm lengths and arranged on a polyethylene film backing strip in a single layer with each fiber straight and touching its neighboring fiber(s) along essentially its entire length. Thus the fibers were substantially parallel and aligned in the same direction. The total width of the fiber array formed was about 60 mm. The fiber ends were secured to the polyethylene strip at their ends to maintain fiber alignment during coating and other processing.

A slurry coating material was prepared, having the following composition in parts by weight:

| | |
|---|---|
| 2-Propanol | 49 parts |
| Poly(vinylbutyral) | 6 parts |
| Butyl Benzyl Phthalate | 6 parts |
| Distilled water | 6 parts |
| Silicon metal powder | 33 parts |

The silicon metal powder used had a mean particle size of about 3 $\mu$m and about 99% purity, with 0.7% iron as the principal impurity. The slurry was coated with a brush onto the previously prepared array of SiC fibers to a thickness of about 150 $\mu$m. The slurry had sufficient viscosity to remain on the fibers. After application of the slurry on the first side, the coated composite was dried at about 20°C for about two hours. The polyethylene backing then could be removed without disturbing the alignment of the fibers, and after the backing was removed, the side of the array which had originally been against the polyethylene film was coated with the same slurry to an extent of about ten microns, and again dried by the same conditions as after the first coating. The dried doubly coated composite was flexible and is called a "tape".

Squares 50 mm on each side were cut from the tape. Approximately eight of these squares were stacked with fiber directions in all squares the same, and the stack was then pressed at room temperature in a steel die at a pressure of about 21 MPa. The polymer bonded composite formed by this first pressing was then transferred to a graphite hot pressing die and compacted further at 1250°C and about 21 MPa pressure in an atmosphere of flowing nitrogen gas for about fifteen minutes. This second, hot pressing served to sinter the silicon matrix and pyrolize and expel the fugitive organic binder components [poly-(vinylbutyral) and butyl benzyl phthalate]. The result of this process was a coherent and strong silicon metal composite with silicon carbide fibers.

The silicon matrix composite from the second pressing was then reacted over a period of 35 to 40 hours with high purity nitrogen by the rate limited process already described above. As a result of this treatment, the silicon metal matrix was substantially quantitatively converted to silicon nitride, with a 66.5% weight increase and a 22% volume increase. The volume increase, however, is accommodated within the pores of the silicon matrix composite, so that no change in its external dimensions occurs during the transformation into silicon nitride.

The silicon nitride composite was sliced into test samples along two sets of perpendicular planes, each of which was parallel to the direction of the included silicon carbide fibers and the slices were polished to a dimension of 3.18 x 3.18 x 50 mm with a grit 320 diamond grinding wheel. Apparent density and predominant crystalline phases were determined on one of these samples and three were subjected to a three point bending flexural strength test as already described. The average of three flexural tests and the other measurements compared with high quality commercial reaction bonded silicon nitride (RBSN) without fiber reinforcement as follows:

|  | Without SiC Fibers | With SiC Fibers |
|---|---|---|
| Apparent density: | 2400 Kg/m$^3$ | 2410 Kg/m$^3$ |
| Flexural Strength: | 275 MPa | over 600 MPa |
| Failure Mode: | Catastrophic | Non-catastrophic |
| Major phases: | alpha and beta SiC | same as at left |

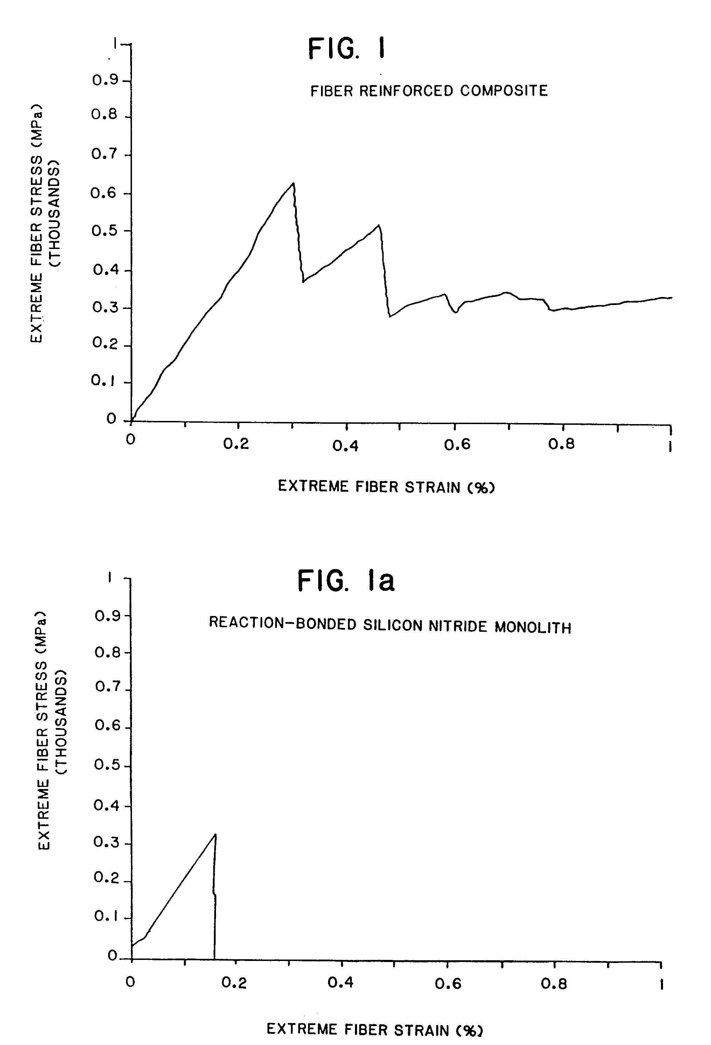

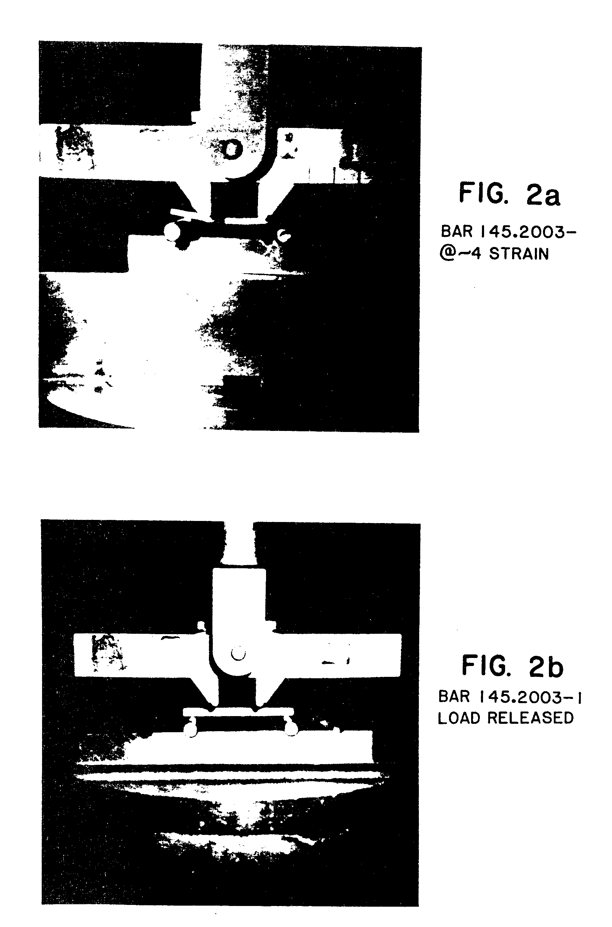

The stress-strain diagrams of the two types are shown in Figure 1. The presence of the reinforcing fiber leads to a higher strength and increased work of fracture. The composite, unlike monolithic RBSN, can sustain substantial loads after initial matrix failure, as shown by the retention of significant fiber stress after the first decline in such stress with increasing strain, which occurs just above 3% fiber strain in this Figure 1. This decline in composite stress with increasing strain is defined as the initial "failure" of the composite, by analogy with non-composite ceramics, where such a decline in stress with strain does in fact usually result in total failure from the inability to bear any significant loads afterward. This behavior of most ceramics is called catastrophic failure. In contrast, when the composite stress after initial failure is at least 20% of the value immediately before failure, the failure is defined as non-catastrophic. Non-catastrophic failure of a composite produced in this Example is also demonstrated in Figure 2, which shows photographs of a typical composite during testing.

Example 2

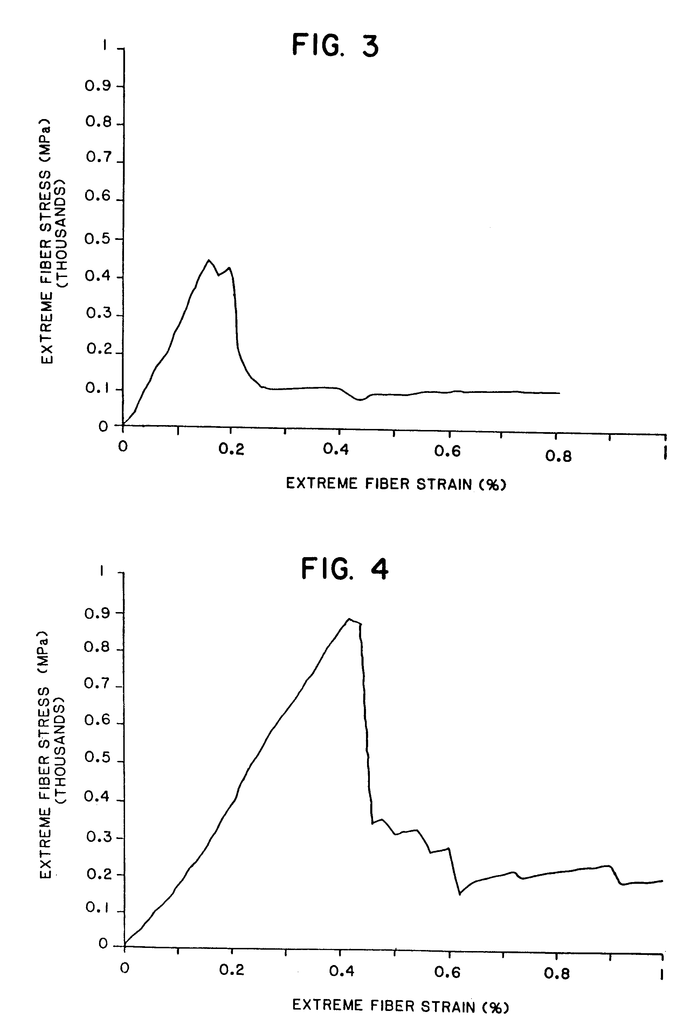

This example was the same as Example 1, except that the reinforcing fibers used had a silicon rich surface layer instead of a carbon rich one. Figure 3 shows the stress-strain diagram for this type of composite. The flexural strength and work of fracture achieved are lower than for Example 1 but still better than for unreinforced RBSN, and the failure mode is still non-catastrophic.

Example 3

This example was the same as Example 1, except that the second pressing operation of that Example was replaced with uniaxial pressing at 100°C and about 21 MPa in a steel mold. The density of these composites was 2540 Kg/m$^3$ and the flexural strength more than 875 MPa. The stress-strain diagram and work of fracture are shown in Figure 4. The different pressing conditions result in higher density and flexural strength.

Various physical property comparisons among the products from Examples 1-3 and unreinforced conventional reaction bonded silicon nitride are shown in the table below. Values shown are averages of two or three specimens. The "failure" shown in the second column of the table is the point of first decrease in fiber stress with increasing strain, as described above. The composite samples never entirely broke, even up to 6% fiber strain, and retained significant fractions of their maximum strength even at such high strains, as shown in the table. The work of fracture was calculated from the area under the load-displacement curve from the three point bend test already described. The work of fracture is more than an order of magnitude higher for the reinforced samples.

| Product from Example Number: | Percent Strain to Failure | Maximum Bending Stress, Giga-pascals | Work of Fracture, Joules/cm$^2$ | Percent of Maximum Strength Retained at 6% Strain |
|---|---|---|---|---|
| 1 | 3.05 | 0.64 | 9 | 54 |
| 2 | 3.8 | 0.9 | 10 | 31 |
| 3 | 1.9 | 0.48 | 4 | 21 |
| Unreinforced | - | 0.24 | 0.25 | 0 |

While the examples involve unidirectional filament or fiber arrays, it should be clearly understood that is not to be construed as a limitation. The present composites can be made with layers of reinforcing fibers oriented in any of the known arrangements such as alternating layers of fibers at various angles to one another. As pointed out above, all of the known fiber composite technology is applicable to the present invention including all the known filament and reinforcing cloth orientation know-how.

The most significant and unexpected property of the composite of the present invention is, as already pointed out, the composites ability to retain a very large percentage of its original strength after initial fracture. The percent of maximum strength retained at 6% strain can be as high as about 80%.

## Claims

1. A fiber-reinforced composite, comprising:
   (a) a matrix comprising predominantly reaction-bonded silicon nitride,
   (b) reinforcing silicon carbide ceramic fibers at least one millimeter in average length and with a diameter of about 140 $\mu$m, and
   (c) a carbon-rich or silicon-rich coating on the fibers,
   said composite having a modulus of rupture of at least 550 MPa and a Young's modulus of elasticity of at least 375 MPa of strains below 300 MPa.

2. A composite according to claim 1, wherein said silicon carbide filaments are predominantly continuous from one edge of the composite to an opposite edge.

3. A composite according to claim 1 or 2, wherein said silicon carbide filaments are substantially straight and mutually parallel in most volume regions of the composite not greater than one millimeter in maximum dimension.

4. A composite according to any one of the preceding claims, wherein said silicon carbide filaments are formed by chemical vapor deposition onto a filamentous carbon substrate.

5. A process for the manufacture of ceramic composites, comprising the steps of:
   (a) forming an array of silicon carbide filaments at least one millimeter in length and with a diameter of about 140 $\mu$m;
   (b) impregnating said array of part (a) with a mixture of silicon powder and a non-siliceous organic polymer in solvent;
   (c) drying the impregnated array of filaments formed in part (b) to form a green composite;
   (d) debinderizing the dried impregnated array from part (c) by heating it to a temperature not greater than 1250°C. in an inert gas atmosphere for 15 minutes and cooling by natural convection; and
   (e) reaction bonding the debinderized array by heating it in a nitrogen atmosphere to a temperature below the melting point of silicon for 30 - 48 hours

6. A process according to claim 5, wherein said array of silicon carbide filaments is made up of layers of tape, the tape being comprised of a single filament thickness of substantially straight and parallel continuous silicon carbide filaments.

7

**7.** A process according to claim 6, wherein the shape of the composite to be formed is a parallelepiped and segments of the tape are assembled in a stack with the orientation of filaments in all layers of the stack maintained mutually parallel.

**8.** A process according to claim 7, in which the assembled segments are mechanically compressed to give a coherent body with the final shape and size desired for the composite before debinderizing the compressed assembly by heating at the temperature not greater than 1250° C.

**9.** A flexible tape for use as a reinforcement in the manufacture of ceramic composites comprising a matrix of reaction-bonded silicon nitride, said tape comprising:

(a) a closely packed layer one filament thick of substantially straight and coparallel continuous silicon carbide ceramic fibers at least one millimeter in average length and about 140 $\mu$m in diameter, said fibers constituting more than ten percent of the volume of the tape;

(b) a matrix of a mixture of silicon powder and a non-siliceous organic polymer impregnating said layer of part (a); and

(C) a carbon-rich or silicon-rich coating on the fibers.

**10.** A flexible tape according to claim 9, wherein said organic polymer consists essentially of poly-(vinylbutyral) and a plasticizer therefor.

**Revendications**

**1.** Matériau composite armé de fibres, se composant :

a) d'une matrice consistant de matière prédominante en nitrure de silicium formé par liaison de réaction,

b) de fibres céramiques d'armature en carbure de silicium ayant une longueur moyenne d'au moins un millimètre et d'un diamètre d'environ 140 $\mu$m, et

c) d'un revêtement riche en carbone ou riche en silicium déposé sur les fibres,

ledit matériau composite ayant un module de rupture d'au moins 550 MPa et un module d'élasticité d'Young d'au moins 375 MPa d'efforts inférieurs à 300 MPa.

**2.** Matériau composite selon la revendication 1, dans lequel lesdits filaments de carbure de silicium sont en prédominance continus d'un bord du matériau composite au bord opposé.

**3.** Matériau composite selon la revendication 1 ou 2, dans lequel lesdits filaments de carbure de silicium sont sensiblement rectilignes et parallèles les uns aux autres dans la majeure partie des régions du volume du matériau composite ayant une dimension maximale qui ne dépasse par un millimètre.

**4.** Matériau composite selon l'une quelconque des revendications précédentes, dans lequel lesdits filaments de carbure de silicium sont formés par dépôt chimique en phase vapeur sur un substrat filamenteux de carbone.

**5.** Procédé de fabrication de céramiques composites, comprenant les étapes de :

a) formation d'un ensemble de filaments de carbure de silicium ayant une longueur d'au moins un millimètre et un diamètre d'environ 140 $\mu$m ;

b) imprégnation dudit ensemble de l'étape (a) à l'aide d'un mélange de poudre de silicium et d'un polymère organique non siliceux dans un solvant ;

c) séchage de l'ensemble imprégné de filaments formé à l'étape (b) pour former un matériau composite crû ;

d) élimination du liant de l'ensemble séché et imprégné de l'étape (c) par son chauffage à une température ne dépassant pas 1250°C dans une atmosphère de gaz inerte pendant 15 minutes et refroidissement par convexion naturelle ; et

e) liaison de réaction de l'ensemble, dont le liant a été éliminé, par son chauffage dans une atmosphère d'azote à une température inférieure au point de fusion du silicium pendant 30-48 heures.

**6.** Procédé selon la revendication 5, dans lequel ledit ensemble de filaments de carbure de silicium est mis en forme de couches de ruban, le ruban ayant l'épaisseur d'un filament unique et étant formé de

EP 0 188 270 B1

filaments continus sensiblement rectilignes et parallèles de carbure de silicium.

7. Procédé selon la revendication 6, dans lequel la forme devant être conférée au matériau composite est un parallélépipède et des segments de bandes sont assemblés en un empilement de manière que l'orientation des filaments de toutes les couches de l'empilement soit maintenue mutuellement parallèle.

8. Procédé selon la revendication 7, dans lequel les segments assemblés sont soumis à une compression mécanique pour constituer un corps cohérent ayant la forme et la dimension finales souhaitées du matériau composite avant élimination du liant de l'ensemble comprimé par chauffage à la température ne dépassant pas 1250°C.

9. Bande flexible destinée à être utilisée comme armature dans la fabrication de céramiques composites comprenant une matrice de nitrure de silicium produit par liaison de réaction, ladite bande comprenant :
   a) une couche étroitement tassée d'une épaisseur d'un filament et formée de fibres céramiques continues, sensiblement rectilignes et parallèles les unes aux autres, de carbure de silicium, ayant une longueur moyenne d'au moins un millimètre et un diamètre d'environ 140 $\mu$m, lesdites fibres représentant plus de dix pour cents en volume de la bande ;
   b) une matrice d'un mélange de poudre de silicium et d'un polymère organique non siliceux d'imprégnation de ladite couche spécifiée sous (a) ; et
   c) un revêtement des fibres qui est riche en carbone ou riche en silicium.

10. Bande flexible selon la revendication 9, dans laquelle ledit polymère organique consiste essentiellement en poly(vynilbutyral) et en un plastifiant de ce dernier.

**Patentansprüche**

1. Faserverstärkte Zusammensetzung umfassend:
   (a) eine Matrix umfassend überwiegend reaktionsgebundenes Siliziumnitrid,
   (b) verstärkende Siliziumkarbidkeramikfasern mit wenigstens einer durchschnittlichen Länge von 1 mm und mit einem Durchmesser von etwa 140 m und
   (c) eine kohlenstoffreiche oder siliziumreiche Beschichtung auf den Fasern,
   wobei die Zusammensetzung ein Bruchmodul von wenigstens 550 MPa und ein Elastizitätsmodul von wenigstens 375 MPa bei Belastungen unter 300 MPa aufweist.

2. Zusammensetzung nach Anspruch 1,
   wobei die Siliziumkarbidfilamente überwiegend von einem Rand der Zusammensetzung zu einem gegenüberliegenden Rand durchgehend sind.

3. Zusammensetzung nach Anspruch 1 oder 2,
   wobei die Siliziumkarbidfilamente im wesentlichen gerade und zueinander parallel in den meisten Volumenbereichen der Zusammensetzung sind, die nicht größer als 1 mm im maximalen Ausmaß sind.

4. Zusammensetzung nach einem der vorhergehenden Ansprüche, wobei die Siliziumkarbidfilamente durch Absetzen von chemischem Dampf auf ein faserförmiges Kohlenstoffsubstrat gebildet werden.

5. Verfahren zur Herstellung von keramischen Zusammensetzungen umfassend die Schritte von:
   (a) Bildung eines Feldes von Siliziumkarbidfilamenten mit einer Länge von wenigstens 1 mm und mit einem Durchmesser von etwa 140 $\mu$m,
   (b) Imprägnieren des Feldes aus Schritt (a) mit einem Gemisch aus Siliziumpulver und einem nicht siliziumenthaltenden gelösten organischen Polymer,
   (c) Trocknen des imprägnierten Feldes von Filamenten, das im Schritt (b) ausgebildet wurde, um eine grüne Zusammensetzung zu bilden,
   (d) Loslösen des getrockneten imprägnierten Feldes aus Schritt (c) durch Erhitzen auf eine Temperatur nicht größer als 1250°C in einer inerten Gasatmosphäre für 15 Minuten und kühlen durch natürliche Konvektion, und
   (e) Reaktionsbinden des losgelösten Feldes durch Heizen in einer Stickstoffatmosphäre bei einer Temperatur unter dem Schmelzpunkt von Silizium für eine Dauer von 30 bis 48 Stunden.

6. Verfahren nach Anspruch 5,
wobei das Feld von Siliziumkarbidfilamenten aus Bandlagen ausgebildet ist, wobei das Band von einer einzigen Filamentstärke von im wesentlichen geraden und parallel durchgehenden Siliziumkarbidfilamenten umfaßt wird.

7. Verfahren nach Anspruch 6,
wobei die Form der auszubildenden Zusammensetzung ein Parallelepid ist und Segmente des Bandes in einem Stapel aufgebaut werden, wobei die Orientierung der Filamente in allen Lagen des Stapels zueinander parallel gehalten wird.

8. Verfahren nach Anspruch 7,
in dem die aufgebauten Segmente mechanisch zusammengedrückt werden, um einen zusammenhängenden Körper mit der endgültigen Form und Größe zu ergeben, die für die Zusammensetzung gewünscht ist, bevor der zusammengedrückte Aufbau durch Erhitzen auf eine Temperatur nicht größer als 1250°C gelöst wird.

9. Biegsames Band zur Verwendung als Verstärkung bei der Herstellung von keramischen Zusammensetzungen umfassend eine Matrix aus reaktionsgebundenem Siliziumnitrid, wobei das Band umfaßt:
(a) eine dichtgepackte, ein Filament starke Lage von im wesentlichen geraden und coparallelen durchgehenden Siliziumkarbidkeramikfasern mit einer durchschnittlichen Länge von wenigstens einem Millimeter und einem Durchmesser von etwa 140 $\mu$m, wobei die Fasern mehr als 10% des Volumens des Bandes darstellen,
(b) Matrix eines Gemisches aus Siliziumpulver und einem nicht-siliziumhaltigen organischen Polymer zum Imprägnieren der Lage aus Schritt (a), und
(c) eine kohlenstoffreiche oder siliziumreiche Beschichtung auf den Fasern.

10. Biegsames Band nach Anspruch 9,
wobei das organische Polymer im wesentlichen aus Poly(vinylbutyral) une einem Weichmacher besteht.

# FIG. I

FIBER REINFORCED COMPOSITE

EXTREME FIBER STRESS (MPa) (THOUSANDS)

EXTREME FIBER STRAIN (%)

# FIG. Ia

REACTION-BONDED SILICON NITRIDE MONOLITH

EXTREME FIBER STRESS (MPa) (THOUSANDS)

EXTREME FIBER STRAIN (%)

FIG. 2a

BAR 145.2003-
@~4 STRAIN

FIG. 2b

BAR 145.2003-1
LOAD RELEASED

FIG. 3

FIG. 4